# EUROPÄISCHE PATENTANMELDUNG

(11) **EP 0 902 148 A2**
(43) Veröffentlichungstag der Anmeldung: **17.03.1999**
(21) Anmeldenummer: 98113757.3
(22) Anmeldetag: 23.07.1998
(51) Int. Cl.: E06B 3/22

(54) **Voll- oder Hohlprofil aus faserverstärktem Kunststoff**

(30) Priorität: 04.08.1997 DE 29713856 U
(71) Anmelder: SCHÜCO International KG, 33609 Bielefeld (DE)
(72) Erfinder: Tönsmann, Armin, 33818 Leopoldshöhe-Bexterhagen (DE); Höcker, Eitel-Friedrich, 33739 Bielefeld (DE)
(74) Vertreter: Stracke, Alexander, Dipl.-Ing.

(57) **Zusammenfassung**

Das Voll- oder Hohlprofil aus Kunststoff inbesondere für die Herstellung von Fenstern, Türen weist Verstärkungseinlagen auf, die aus Naturfasern oder aus Fäden, Kordeln, Schnüren oder aus textilen ein- oder mehrlagigen Flächengebilden bestehen, die aus Naturfasern gefertigt sind. Die in den Kunststoff der Profile eingebetteten Verstärkungseinlagen in der Form von Waren, die aus Naturfasern hergestellt wurden, werden zweckmäßierweise lose gearbeitet, damit eine gute Durchdringung des Kunststoffes beim Einbettungsvorgang erreicht wird.

## Beschreibung

Die Erfindung bezieht sich auf ein Voll- oder Hohlprofil aus faserverstärktem Kunststoff, insbesondere für die Herstellung von Fenstern, Türen oder Fassaden.

Der Einsatz von Voll- oder Hohlprofilen aus faserverstärktem Kunststoff zur Erstellung von Rahmenkonstruktionen o.dgl., insbesondere aber für die Herstellung von Fenstern, Türen oder Fassaden, ist an sich bekannt.

Bisher wurden faserverstärkte Kunststoffprofile mit ebenfalls aus Kunststoff gefertigten Fasern hergestellt und verwendet. Bei derartigen, kunstfaserverstärkten Voll- oder Hohlprofilen besteht der tragende Kunststoff aus Polyester, während als Fasern Glasfasern verwendet werden.

Die damit erzielten Festigkeits- und Elastizitätseigenschaften reichen in vielen Fällen nicht aus, um derartige Voll- oder Hohlprofile ohne Metallarmierungen verwenden zu können.

Es kommt hinzu, daß glasfaserverstärkte Kunststoffprofile insofern sehr schwer zu bearbeiten sind, als die Glasfasern zu einem erhöhten Verschleiß der Bearbeitungswerkzeuge, wie z.B. der Sägeblätter, führen.

Glasfasern haben sich auch als gesundheitsschädlich erwiesen.

Der Erfindung liegt die Aufgabe zugrunde, ein Voll- oder Hohlprofil der eingangs genannten Art so zu gestalten, daß es preiswert herstellbar und uneingeschränkt auch ohne Metallarmierungen für verschiedenartige Konstruktionen einsetzbar ist.

Diese Aufgabe wird erfindungsgemäß dadurch gelöst, daß die in den Kunststoff des Voll- oder Hohlprofils eingebettete Verstärkungseinlage aus Naturfasern, aus Naturfasern gefertigten Fäden, Kordeln oder Schnüren oder aus einem aus Naturfasern gefertigten, textilen Flächengebilde besteht.

Sofern die den Kunststoff verstärkenden Fasern aus Naturfasern bestehen, liegt der Elastizitätsmodul der erfindungsgemäß hergestellten Voll- oder Hohlprofile im Bereich zweischen 10.000 N/mm² und 30.000 N/mm² oder noch darüber je nach Art und Aufbereitungsgrad der verwendeten Naturfasern. Damit werden Größenordnungen erreicht, die den Einsatz entsprechender Voll- oder Hohlprofile ohne verstärkende Metallarmierungen, beispielsweise im Fensterbau, bei der Herstellung von Türen oder von Fassaden, ermöglichen.

Als besonders zweckmäßig wird die Verwendung von Fasern aus Hanf, Sisal, Jute, Leinen oder aus einer Kombination der genannten Naturfasern angesehen.

Besonders gute mechanische Eigenschaften werden erzielt, wenn die Naturfasern in Achslängsrichtung des Profiles verlaufen.

Dabei ist es von Vorteil, wenn Naturfasern großer Länge in den Kunststoff eingebettet sind.

Durch den Einsatz von Naturfasern als Verstärkungseinlagen für Kunststoffprofile sind für die Bearbeitung der Kunststoffprofile herkömmliche Werkzeuge verwendbar, die dann hohe Standzeiten aufweisen. Dies bringt für die Verarbeiter eine große Produktionssicherheit.

Es kommt auch hinzu, daß die Oberflächen der Kunststoffprofile zur Vorbereitung einer Beschichtung oder der Aufbringung einer Folie besser zu bearbeiten sind, da sich Naturfasern im harzgetränkten Zustand wie das Harz selbst verhalten.

Ausführungsbeispiele von mit Verstärkungseinlagen ausgerüsteten Kunststoffprofilen sowie von Verstärkungseinlagen, die aus Naturfasern gefertigt sind, sind in den Zeichnungen dargestellt und werden im folgenden beschrieben.

Es zeigen:
- Figur 1: einen Blendrahmen und einen Flügelrahmen eines Fensters im Schnitt, bei dem der Flügelrahmen und der Blendrahmen aus Kunststoffhohlprofilen,
- Figur 2: ein T-Profil aus Kunststoff, in dessen Stege aus Naturfasern gefertigte, textile Flächengebilde eingebettet sind,
- Figur 3: ein Winkelprofil mit einer doppellagigen Verstärkungseinlage,
- Figur 4: eine aus Naturfasern gefertigte Kordel,
- Figur 5: ein aus Naturfasern hergestelltes Gewebe und
- Figur 6: ein Gewirke aus Fäden, die aus Naturfasern gefertigt wurden.

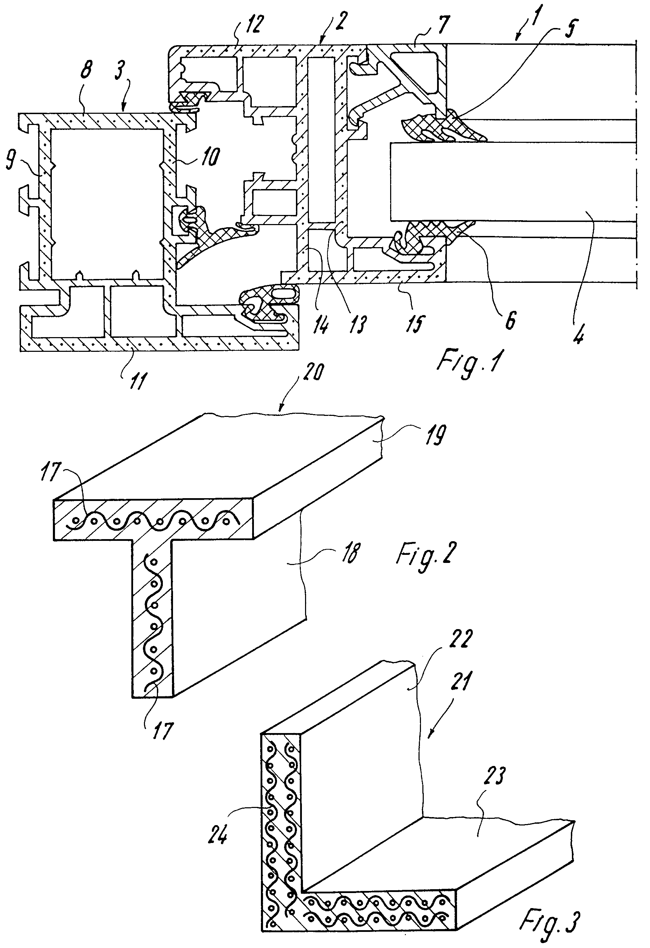

Das in der Fig. 1 aufgezeigte Fenster weist einen Flügelrahmen 2 und einen Blendrahmen 3 auf, die als Kunststoffhohlprofile ausgebildet sind. Im Flügelrahmen 2 ist der Randbereich einer Scheibe 4 festgelegt, an der sich Dichtungen 5 und 6 abstützen, die von einem Zusatzprofil 7 bzw. vom Flügelrahmen 2 gehaltert werden.

Die Wandungen 8,9,10,11 des Blendrahmenprofils 3 und die Wandungen 12,13,14 und 15 des Flügelrahmenprofils 2 sind mit Verstärkungseinlagen versehen, die durch Punkte gekennzeichnet sind.

Die Verstärkungseinlagen können aus Naturfasern oder aus Fäden, Kordeln, Schnüren bestehen, die aus Naturfasern gefertigt sind.

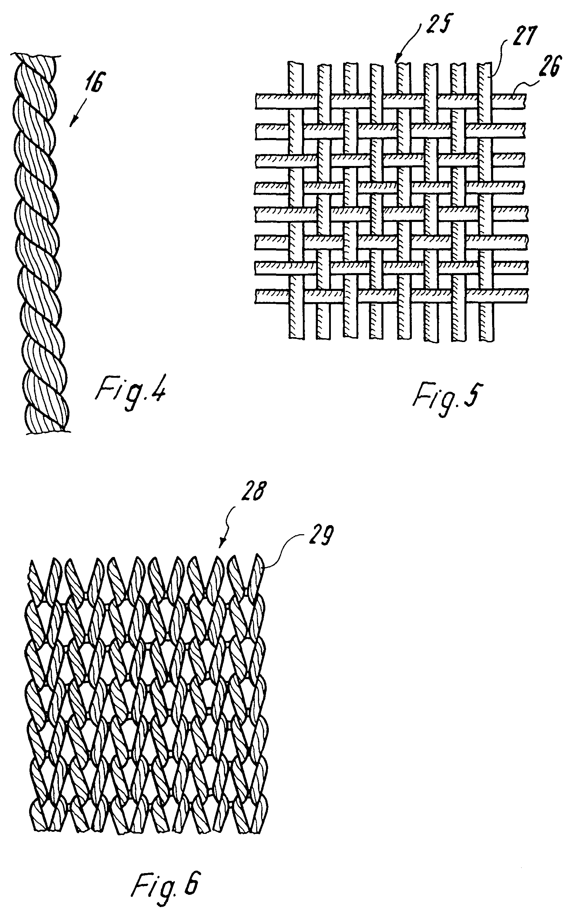

Eine derartige Kordel ist in der Fig. 4 aufgezeigt und mit dem Bezugszeichen 16 versehen.

Als Verstärkungseinlagen sowohl bei den Hohlprofilen nach der Fig. 1 als auch bei den Vollprofilen nach den Fig. 2 und 3 können auch textile Flächengebilde 17 verwendet werden, die bei dem Ausführungsbeispiel nach der Fig. 2 einlagig ausgebildet sind.

Das textile Flächengebilde 17 ist in der Fig. 2 in den Stegen 18 und 19 des Kunststoff-T-Profils 20 eingebettet.

Die Fig. 3 stellt ein Winkelprofil 21 dar, in dessen Stege 22 und 23 zweilagige Verstärkungseinlagen 24 angeordnet sind, die auch schlauchförmig gestaltet sein können und aus einem Gewirke oder aus einem Gewebe bestehen können.

In der Fig. 5 ist ein Gewebe 25 dargestellt, dessen Kettfäden 26 und Schußfäden 27 aus Naturfasern gefertigt sind.

Die Fig. 6 zeigt ein Gewirke 28, dessen Fäden 29 ebenfalls aus Naturfasern hergestellt sind. Die Gewebe 25 und Gewirke 28 können die Verstärkungseinlage für die Kunststoffprofile bilden.

All diese Verstärkungseinlagen, ob sie nun als Kordel 16, als Gewebe 25 oder als Gewirke 28 ausgebildet sind, sind vorteilhaft lose gearbeitet, so daß beim Einbettungsvorgang das Kunststoffmaterial diese Verstärkungseinlagen gut durchtränken kann.

Die erfindungsgemäßen Profile können im Strangpreßverfahren oder im Pultrusions-Verfahren hergestellt werden.

Über die Tatsache hinaus, daß durch die Verwendung von Naturfasern sehr günstige mechanische Eigenschaften für das Voll- oder Hohlprofil erzielt werden, bringt die Erfindung auch noch den Vorteil mit sich, daß ein derartiges Voll- oder Hohlprofil preiswert hergestellt werden kann, was daran liegt, daß Naturfasern der angegebenen Art vergleichsweise preiswert zu beschaffen sind.

Auch in ökologischer Hinsicht ist die teilweise Verwendung von Naturprodukten (Naturfasern und daraus hergestellte Waren) bei der Herstellung entsprechender Voll- oder Hohlprofile als vorteilhaft anzusehen.

## Patentansprüche

1. Voll- oder Hohlprofil aus faserverstärktem Kunststoff, insbesondere für die Herstellung von Fenstern, Türen oder Fassaden, **dadurch gekennzeichnet,** daß die in den Kunststoff eingebetteten Verstärkungseinlagen aus Naturfasern, aus aus Naturfasern gefertigten Fäden, Kordeln oder Schnüren oder aus aus Naturfasern gefertigten textilen Flächengebilden bestehen.

2. Voll- oder Hohlprofil nach Anspruch 1, dadurch gekennzeichnet, daß die Naturfasern aus Hanf, Sisal, Jute, Leinen oder aus einer Kombination der genannten Naturfasern bestehen.

3. Voll- oder Hohlprofil nach Anspruch 1 oder 2, dadurch gekennzeichnet, daß die Naturfasern in Achslängsrichtung des Voll- oder Hohlprofiles verlaufen.

4. Voll- oder Hohlprofil nach einem der Ansprüche 1 bis 3, dadurch gekennzeichnet, daß Naturfasern großer Länge in den Kunststoff eingebettet sind.

5. Voll- oder Hohlprofil nach Anspruch 1, dadurch gekennzeichnet, daß das textile Flächengebilde als einlagiges oder mehrlagiges Gewebe oder Gewirke ausgebildet ist.

6. Voll- oder Hohlprofil nach Anspruch 1 oder 5, dadurch gekennzeichnet, daß die Kordeln, Schnüre oder textilen Flächengebilde lose gearbeitet sind.

7. Voll- oder Holprofil nach einem der vorhergehenden Ansprüche, dadurch gekennzeichnet, daß das Voll- oder Hohlprofil im Strangpreßverfahren hergestellt ist.

8. Voll- oder Hohlprofil nach einem der Ansrpüche 1 bis 6, dadurch gekennzeichnet, daß das Voll- oder Hohlprofil im Pultrusionsverfahren gefertigt ist.
